**Europäisches Patentamt**

**European Patent Office**

**Office européen des brevets**

(19)

(11) **EP 1 585 040 A1**

(12) # EUROPEAN PATENT APPLICATION

(43) Date of publication:
**12.10.2005 Bulletin 2005/41**

(51) Int Cl.$^7$: **G06F 17/50**

(21) Application number: **04386011.3**

(22) Date of filing: **06.04.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicants:
• **Dimas, Athanasios**
**26500 Patras (GR)**
• **Balaras, Elias**
**63082 Chalkidiki (GR)**

(72) Inventors:
• **Dimas, Athanasios**
**26500 Patras (GR)**
• **Balaras, Elias**
**63082 Chalkidiki (GR)**

(74) Representative: **Kiortsis, Christina**
**7, Mavrokordatou Street**
**106 78 Athens (GR)**

(54) **A numerical method for simulating the interaction between fluid flow and moving or deformable structures**

(57) The invention relates to computer software systems for simulating physical processes, i.e. the interaction of fluid flow and moving or deformable structures. Methods to simulate fluid flow processes belong to the technical field of Computational Fluid Dynamics. The proposed invention applies to fluid/structure interaction problems that are encountered in biological flows, such as the blood flow in the human circulatory system, air flow in the lungs and blood flow in medical implants and artificial organs. The invention method is based on a non-boundary-conforming strategy to enforce the appropriate boundary conditions on moving or deformable solid surfaces. The invention method is characterized by a field-extension procedure for the time advancement of the equations and by the reconstruction/extension of the solution on the well-defined normal, which is shown with broken line where $h_1 = h_2$, to the boundary, which is shown with bold unbroken line, resulting in a robust method that does not require special treatments.

**Figure 1.**

EP 1 585 040 A1

## Description

### Technical field

The invention relates to computer software systems for simulating physical processes, i.e. the interaction of fluid flow and moving or deformable structures.

Methods to simulate fluid flow processes belong to the technical field of Computational Fluid Dynamics (CFD). CFD is an established research and design tool in disciplines as diverse as engineering, medicine and biology. This diversity of applications is accompanied by a diversity of CFD methods tailored to specific categories of problems. The proposed invention is a new method applicable to fluid/structure interaction problems that are encountered in biological flows. Characteristic examples include the flow of blood in the human circulatory system under normal and pathologic conditions, flow of air in the lungs and blood flow in medical implants, such as stents and grafts, and artificial organs, such as artificial hearts. Such problems, where fluid flow interacts with a complex moving and/or deformable structure, still pose a formidable challenge to any computational method and are currently at the forefront of the CFD field.

### State-of-the-art and drawbacks of current methods

There exist two broad categories of methods applicable to simulations of flows with dynamically moving boundaries: (1) *Boundary-conforming* methods, where the computational grid always conforms to the solid boundary and is deformed or regenerated as the boundary changes location; and (2) *Non-boundary-conforming* methods, where the computational grid remains unchanged at all times and the gird lines are not aligned with the body surface. In the former category, the regeneration and deformation of the computational grid is a tedious process that requires extensive user input, a feature that limits substantially the range of applicability of the method. The later category does not suffer from the above limitation, but several problems related with the implementation of boundary conditions in the vicinity of moving boundaries remain to be addressed. Non-boundary-conforming methods were introduced in the beginning of the 70s and a distributed forcing function was used to enforce proper boundary conditions in the vicinity of a moving boundary. A major drawback of these formulations is the smoothing of the solution near the boundary, which is thus spread over several (usually 3-4) computational cells.

Alternative formulations that eliminate the above drawback have been proposed, but are all restricted to stationary boundaries. A common feature of these approaches is that the forcing function is considered in the framework of the discretized equations of motion and a set of *discrete body-forces* at the grid nodes nearest to the boundary is introduced to enforce the boundary conditions. The differences between these approaches are related to the way the discrete force field is reconstructed. The simplest reconstruction procedure uses one-dimensional reconstructions that are effective only in cases where body surfaces are largely aligned with the grid lines. Multidimensional schemes, which are applicable to complex boundaries without special treatments, have been introduced but they are also restricted to stationary boundaries.

### Summary of the invention and advantages of invention method

To compute the flow around complex moving objects, which are not aligned with the grid, we submit a method that practically reconstructs the solution in the vicinity of the body according to the target boundary values. At each instant in time, the computational nodes on the fixed grid are split into three different categories according to their location relative to the solid boundary: (1) "Solid" points are the ones in the solid phase; (2) "Fluid" points are the ones in the fluid phase; and (3) "Boundary" points, which are central to the reconstruction procedure, are all points in the fluid phase that have at least one neighbour in the solid phase. During the boundary motion, the role of each of the grid nodes on the fixed grid can change several times. For example, "boundary" points can became "fluid" points and "solid" points can became "boundary" points. This process introduces complications to the time advancement of the equations. Here, we submit a solution that is based on a field-extension strategy and has some unique features that are not encountered in alternative methodologies in the literature. The two fundamental advantages of the invention method are the following: (1) It does not require information from past time steps on points that just emerge from the solid phase; and (2) The solution reconstruction/extension is always performed on the well defined normal to the boundary, resulting in a robust method that does not require special treatments.

### Description of the invention method

The equations governing the evolution of the large scales are solved on an underlying grid (in Cartesian or cylindrical coordinates) that covers the entire computational domain without the bodies. Integration is done using a fractional-step method, with an implicit Crank-Nicholson scheme for the viscous terms and a third-order Runge-Kutta (RK3) explicit scheme for all other terms. All spatial derivatives are approximated with second order central differences on a staggered grid. The large-band matrix associated to the solution of the Poisson equation is inverted using direct methods. The above procedure can be summarized into the following steps:

$$\frac{\hat{u}_i^k - u_i^{k-1}}{\Delta t} = -\left[\gamma_k A\left(u_i^{k-1}\right) + \rho_k A\left(u_i^{k-2}\right)\right] +$$
$$\frac{1}{2} a_k \left[B\left(\hat{u}_i^k\right) + B\left(u_i^{k-1}\right)\right] - a_k \frac{\partial p^{k-1}}{\partial x_i} + f_i^k \qquad (1)$$

$$\nabla^2 \phi^k = \frac{1}{a_k \Delta t} \frac{\partial \hat{u}_i^k}{\partial x_i} \qquad (2)$$

$$u_i^k = \hat{u}_i^k - a_k \Delta t \frac{\partial \phi^k}{\partial x_i} \qquad (3)$$

$$p^k = p^{k-1} + \phi^k - \frac{a_k \Delta t}{2\text{Re}} \frac{\partial^2 \phi^k}{\partial x_i^2} \qquad (4)$$

where $u_i^k$ are the fluid velocity components, $\hat{u}_i^k$ are the intermediate fluid velocity components, $p^k$ is the fluid pressure, $\phi^k$ is the fluid pressure correction, $f_i^k$ is the momentum forcing adopted to enforce proper boundary conditions on immersed boundaries and will be discussed in the next paragraph, $\Delta t$ is the time step, Re is the Reynolds number of the flow, and k is the sub-step index ($k$ = 1, 3 ). Operator $A$ represents the terms treated explicitly, and $B$ the ones treated implicitly. The RK3 coefficients are: $a_1$ = 8/15, $\gamma_1$ = 8/15, $\rho_1$ =0, $a_2$ = 2/15, $\gamma_2$ = 5/12, $\rho_2$ = -17/60, $a_3$ = 1/3, $\gamma_3$ = 3/4 and $\rho_3$ = -5/12.

To compute the flow around complex objects, which are not aligned with the grid, the following procedure is submitted. Initially, any complex immersed boundary of arbitrary shape is identified by a series of material-fixed interfacial markers whose location is defined in the reference configuration of the solid. This information is then used to identify the Eulerian grid nodes involved in the reconstruction of the solution near the boundary in a way that the desired boundary conditions for the fluid are satisfied to the desired order of accuracy. The reconstruction is performed "around" the points in the fluid phase closest to the solid boundary (all points that have least one neighbour in the solid phase). In the framework of the present fractional step method, the imposition of boundary conditions on an immersed boundary is equivalent to the addition to equation (1) of a forcing term of the form:

$$f_i^k = \frac{\hat{V}_i^k - u_i^{k-1}}{\Delta t} + \left[\gamma_k A\left(u_i^{k-1}\right) + \rho_k A\left(u_i^{k-2}\right)\right] -$$
$$\frac{1}{2} a_k \left[B\left(\hat{u}_i^k\right) + B\left(u_i^{k-1}\right)\right] + a_k \frac{\partial p^{k-1}}{\partial x_i} \qquad (5)$$

where $\hat{V}_i^k$ is the reconstructed intermediate velocity, such that the desired boundary conditions are satisfied on the immersed boundary.

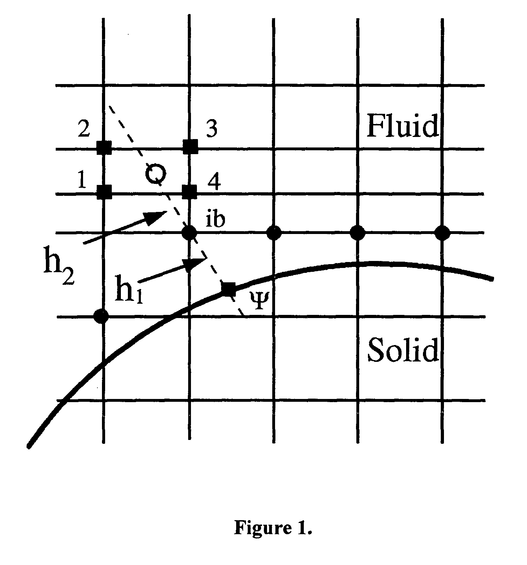

The reconstruction procedure is demonstrated in Figure 1, where a schematic of the interpolation stencil for the reconstruction of the solution in two dimensions is shown. In Figure 1, points on the interpolation stencil are represented by filled squares (■), forcing points are represented by filled circles (●), and virtual points are represented by open circles (o). The reconstruction procedure involves the following steps:

- Find the *virtual* point on the line normal to the boundary in a way that $h_1 = h_2$. This is a straightforward process given that the coordinates for points ib and Ψ are already known.

- Identify grid points 1, 2, 3 and 4, surrounding the *virtual* point using a local search process.
- Then, the interpolation stencil is the one shown in Figure 1. Using this stencil the value of any flow variable θ at point *ib* is:

$$\theta_{ib} = \frac{h_2}{h}\,\theta_\Psi + \frac{h_1}{h}\,\theta_{virtual} \tag{6}$$

with

$$\theta_{virtual} = \sum_1^4 a_i \theta_i \tag{7}$$

where $h = h_1 + h_2$ and $a_i$ are the coefficients of a standard bilinear interpolation involving points 1 to 4.

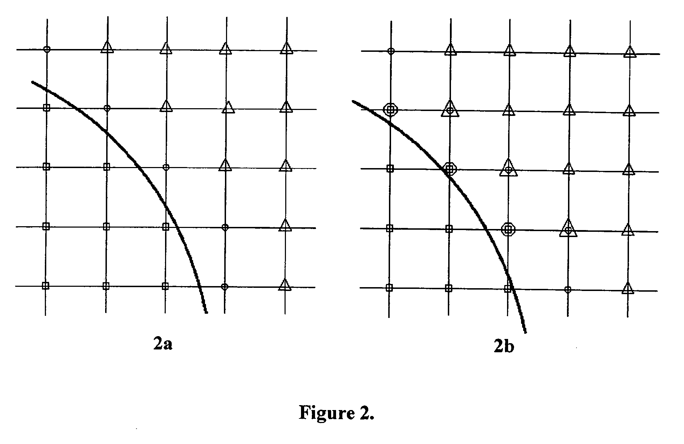

When the immersed boundary moves, the role of several computational nodes in the vicinity of the boundary changes. This is illustrated in Figure 2, where the boundary moves from its position at time step $t^{k-1}$ to a new position at time step $t^k$. In Figure 2, a schematic of a moving boundary on a Cartesian grid is shown. In particular, in Figure 2a, the solid line represents the boundary location at time-level k-1, while in

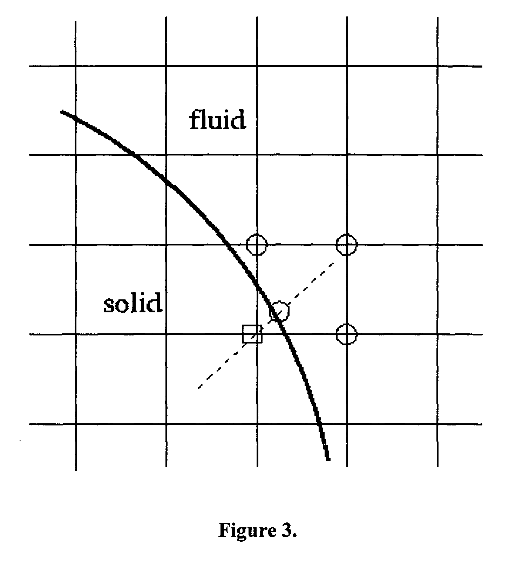

Figure 2b, the solid line represents the boundary location at time-level k. In Figure 2, squares represent solid points, circles represent boundary points, and triangles represent fluid points. In Figure 2, grid nodes marked with two different symbols are the ones that change role as the boundary moves through the grid, where the inner symbol denotes its role at time-level k-1, while the outer symbol its role at the new time-level k. Some velocity nodes ("boundary" points), which were central to the reconstruction of the solution, become interior "fluid" points. In addition, other nodes inside the body ("body" points) at time step $t^{k-1}$ emerge into the fluid and become "boundary" points at $t^k$. The latter family of points does not require any special treatment because the solution at $t^k$ would be reconstructed based on known values. On the other hand, the former family of points introduces problems when computing the right-hand side of equation (1) at $t^k$ because all the grid nodes that were "boundary" points at $t^{k-1}$ would have the correct value of $u_i^{k-1}$ (this is the boundary condition that was enforced at $t^{k-1}$), but most derivatives of $u_i^{k-1}$ would be incorrect since they involve points previously in the interior of the body. To alleviate this problem, the velocity and pressure at these points is "extended" to the interior of the body at time $t^{k-1}$ using 2nd order multi-dimensional reconstructions. A possible reconstruction stencil is shown in Figure 3, where a schematic of the field extension stencil in two dimensions is shown. In Figure 3, the solid line represents the fluid/solid interface at time-level k-1, the square represents the point where the solution is extended, and the circles represent points involved in the extension procedure. Then, the procedure to materialize the reconstruction using linear interpolations becomes similar to the one described in Figure 1.

## Claims

1. A numerical method for simulating the interaction between fluid flow and moving or deformable structures, which is based on a non-boundary-conforming strategy for the imposition of boundary conditions on solid boundary surfaces, **characterized by** a field-extension procedure for the time advancement of the equations, which procedure does not require information from past time steps on points just emerging from the solid phase to the fluid phase as the boundary moves in time because the solution at these points is extended to the interior of the structure using multi-dimensional reconstructions, and by the reconstruction/extension of the solution, which is always performed on the well-defined normal to the boundary defining a virtual point in a way that $h_1 = h_2$ identifying the surrounding grid points and interpolating using equations (6) and (7), resulting in a robust method that does not require special treatments.

**Figure 1.**

2a          2b

**Figure 2.**

**Figure 3.**

**European Patent Office**

## EUROPEAN SEARCH REPORT

Application Number

EP 04 38 6011

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | REZA GHIAS, RAJAT MITTAL, THOMAS S. LUND: "A NON-BODY CONFORMAL GRID METHOD FOR SIMULATION OF COMPRESSIBLE FLOWS WITH COMPLEX IMMERSED BOUNDARIES" 42ND AIAA AEROSPACE SCIENCES MEETING AND EXHIBIT, [Online] 8 January 2004 (2004-01-08), XP002292943 RENO, NEVADA Retrieved from the Internet: URL:http://project.seas.gwu.edu/~fsagmae/papers/AIAA2004-0080.pdf> [retrieved on 2004-08-17] * abstract * * page 2, left-hand column, line 9 - right-hand column, line 50 * * figures 1-4 * ----- | 1 | G06F17/50 |
| A | VERZICCO R ET AL: "Large eddy simulation in complex geometric configurations using boundary body forces" AIAA J. (USA), AIAA JOURNAL, MARCH 2000, AIAA, USA, vol. 38, no. 3, March 2000 (2000-03), pages 427-433, XP008034094 ISSN: 0001-1452 * page 428, left-hand column, line 13 - line 20 * * page 429, left-hand column, line 3 - line 14 * * figure 2 * ----- -/-- | 1 | TECHNICAL FIELDS SEARCHED (Int.Cl.7) G06F |

The present search report has been drawn up for all claims

| Place of search | Date of completion of the search | Examiner |
|---|---|---|
| The Hague | 7 September 2004 | Radev, B |

**European Patent Office**

## EUROPEAN SEARCH REPORT

Application Number

EP 04 38 6011

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | YANG G ET AL: "Calculation of compressible flows about complex moving geometries using a three-dimensional Cartesian cut cell method" INT. J. NUMER. METHODS FLUIDS (UK), INTERNATIONAL JOURNAL FOR NUMERICAL METHODS IN FLUIDS, 30 AUG. 2000, WILEY, UK, vol. 33, no. 8, 30 August 2000 (2000-08-30), pages 1121-1151, XP008034097 ISSN: 0271-2091 * abstract * * page 1122, line 13 - line 31 * * page 1123, line 11 - line 21 * * page 1129, line 5 - page 1135, line 3 * * figures 8,9 * ----- | 1 | |

TECHNICAL FIELDS SEARCHED (Int.Cl.7)

The present search report has been drawn up for all claims

| Place of search | Date of completion of the search | Examiner |
|---|---|---|
| The Hague | 7 September 2004 | Radev, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)